# EUROPEAN PATENT APPLICATION

(11) **EP 4 746 124 A1**
(43) Date of publication of application: **20.05.2026**
(21) Application number: 25191117.8
(22) Date of filing: 22.07.2025
(51) Int. Cl.: H01M 10/613, H01M 10/625, H01M 10/647, H01M 10/6557, H01M 10/658, H01M 50/209, H01M 50/249, H01M 10/6564, H01M 10/6561

(54) **SECONDARY BATTERY MODULE, MANUFACTURING METHOD THEREOF, AND INSULATION UNIT FOR THE MODULE**

(30) Priority: 13.11.2024 KR 20240161351
(71) Applicant: SAMSUNG SDI CO., LTD., Yongin-si, Gyeonggi-do 17084 (KR)
(72) Inventor: CHOI, Junghwan, 17084 Yongin-si (KR)
(74) Representative: Marks & Clerk LLP

(57) **Abstract**

A secondary battery module in which an insulation unit is applied between cells constituting the secondary battery module, a method for manufacturing the secondary battery module, and an insulation unit used in the secondary battery module are disclosed. The secondary battery module includes a module case configured to provide an internal space, a plurality of battery cells disposed in the module case, and an insulation unit interposed between the battery cells and having an exterior that forms the internal space, wherein the internal space is filled with gas.

## Description

### FIELD

The present disclosure relates to a secondary battery module in which an insulation unit is applied between cells constituting the secondary battery module, a method for manufacturing the secondary battery module, and an insulation unit used in the secondary battery module.

### BACKGROUND

Unlike primary batteries that cannot be charged, secondary batteries can be charged and discharged. In general, a secondary battery includes an electrode assembly including positive and negative electrode plates, a case for accommodating the electrode assembly, electrode terminals connected to the electrode assembly, and a vent for degassing gas generated inside the case.

Recently, secondary batteries have largely increased capacity for driving motors and storing power in hybrid vehicles, electric vehicles, etc. In large-capacity batteries, safety is particularly important. For example, in the case of electric vehicles, accidents may occur in which external objects damage the battery case and penetrate or pass through the electrode assembly inside the battery case. In this case, the negative electrode and positive electrode of the electrode assembly come into contact, and thus a very large short-circuit current flows, which may cause overheating, a fire, an explosion, and thermal runaway in the battery.

The herein information disclosed in this Background section is for enhancement of understanding of the background of the present disclosure, and therefore, it may contain information that does not constitute a related (or prior) art.

### SUMMARY

The present disclosure is proposed to improve an insulation effect and additionally obtain a cooling effect by improving insulators disposed between battery cells constituting a secondary battery module.

According to an aspect of the present disclosure, there is provided a secondary battery module including a module case configured to provide an internal space, a plurality of battery cells disposed in the module case, and an insulation unit interposed between the battery cells and having an exterior that forms the internal space, wherein the internal space is filled with gas.

According to an aspect of the present disclosure, there is provided a method of manufacturing a secondary battery, which includes disposing a plurality of battery cells in a module case that provides a space in which the battery cells are accommodated, disposing an insulation unit between the battery cells, and filling with gas an internal space of the insulation unit.

The gas filling the internal space of the insulation unit may comprise an inert gas.

The insulation unit may comprise a plurality of partitions formed in the internal space and configured to divide the internal space into a plurality of sub-spaces and allow the filling gas to communicate between the sub-spaces.

According to an aspect of the present disclosure, there is provided an insulation unit for a secondary battery module, which includes an exterior interposed between a plurality of battery cells disposed in a module case and configured to form an internal space, wherein the internal space is filled with gas.

The insulation unit may further comprise a gas outlet through which the gas filling the internal space is discharged.

The exterior of the insulation unit may comprise the gas outlet through which the gas filling the internal space is discharged.

The gas outlet may comprise: a temperature sensor; and an actuator configured to discharge the gas according to a temperature detected by the temperature sensor.

The gas outlet may comprise a meltable stopper that melts due to a rise in temperature to discharge the gas.

The insulation unit may further comprise a gas inlet through which the gas is injected into the internal space.

The exterior of the insulation unit may comprise the gas inlet through which the internal space is filled with the gas.

The exterior of the insulation unit may comprise a recessed portion recessed toward the internal space.

The exterior of the insulation unit may comprise a plurality of partitions formed in the internal space and configured to divide the internal space into a plurality of sub-spaces and allow the gas to communicate between the sub-spaces.

In some embodiments, the gas filling the internal space of the insulation unit may include an inert gas, preferably, argon gas.

Aspects and features of the present disclosure are not limited to those described herein, and other aspects and features not specifically mentioned herein will be clearly understood by those skilled in the art from the description of the present disclosure herein.

At least some of the above and other features of the invention are set out in the claims.

### BRIEF DESCRIPTION OF THE DRAWINGS

The following drawings attached to the present specification illustrate embodiments of the present disclosure and further describe aspects and features of the present disclosure together with the detailed description of the present disclosure. Thus, the present disclosure should not be construed as being limited to the drawings, in which:
FIG. 1 is a perspective view illustrating a prismatic secondary battery cell;
FIG. 2 is a plan view schematically illustrating a configuration of a secondary battery module to which an insulation unit is applied according to some embodiments of the present disclosure;
FIG. 3 is an example diagram illustrating a secondary battery pack including the secondary battery module of FIG. 2;
FIG. 4 is a conceptual diagram illustrating a state in which the secondary battery pack is installed in a vehicle;
FIG. 5 is a cross-sectional view illustrating a configuration of an insulation unit for a secondary battery module according to some embodiments of the present disclosure;
FIG. 6 is a schematic diagram for describing an operation of the insulation unit when an event occurs in a specific cell in the secondary battery module;
FIG. 7 is a diagram illustrating an insulation unit for the secondary battery module according to some embodiments of the present disclosure;
FIG. 8 is a side view illustrating an insulation unit according to embodiments;
FIGS. 9A to 9C are diagrams illustrating a configuration of a gas outlet according to some embodiments of the present disclosure;
FIGS. 10A and 10B are diagrams illustrating a configuration of the gas outlet according to some embodiments of the present disclosure; and
FIGS. 11 and 12 are diagrams illustrating an internal configuration of an exterior of the insulation unit according to some embodiments.

### DETAILED DESCRIPTION

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her disclosure in the best way. The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

In the figures, dimensions of the various elements, layers, etc. may be exaggerated for clarity of illustration. In addition, the same reference numerals may be assigned to the same components in different embodiments.

References to two compared elements, features, etc. as being "the same" may mean that they are "substantially the same." Thus, the phrase "substantially the same" may include a case having a deviation that is considered low in the art, for example, a deviation of 5% or less. In addition, uniformity of a parameter in a predetermined region may imply uniformity from an average perspective.

Although the terms first, second, and the like are used to describe various components, these components are substantially not limited by these terms. These terms are only used for distinguishing one component from another component, and unless otherwise stated, it is of course that a first component may also be a second component.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components.

As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list.

Throughout the specification, if "A and/or B" is stated, it means A, B or A and B, unless otherwise stated and if "C to D" is stated, it means C or more and D or less, unless otherwise stated.

When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C.

As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below.

The terminology used herein is for the purpose of describing embodiments of the present disclosure and is not intended to limit the present disclosure.

A secondary battery module is provided with a case, a plurality of battery cells, and insulators. The insulators are installed between the cells and serve to delay heat transfer between the cells and provide thermal insulation. Preventing heat transfer between cells in large-capacity secondary battery modules has recently become a major issue, and methods for increasing insulation effects between cells are being proposed.

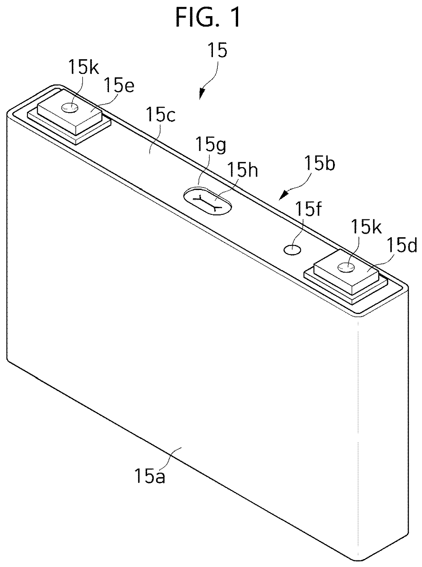

FIG. 1 is a top perspective view illustrating an exterior of a prismatic battery cell 15.

A case 15a defines an overall appearance of the prismatic secondary battery, and may be made of a conductive metal, such as aluminum, aluminum alloy, or nickel-plated steel. In addition, the case 15a may provide a space for accommodating an electrode assembly therein.

A cap assembly 15b may include a cap plate 15c that covers the opening of the case 15a. In some examples, the case 15a and the cap plate 15c may be made of a conductive material. Here, a first terminal 15d and a second terminal 15e may be electrically connected to respective positive and negative (or negative and positive) electrodes inside the case, and may be installed to protrude outward through the cap plate 61.

The cap plate 15c may be equipped with an electrolyte injection port 15f formed to install a sealing plug (or seal pin), and a vent 15h junctioned to a gas discharge hole 15g. The vent 15h is for discharging gas generated inside the secondary battery.

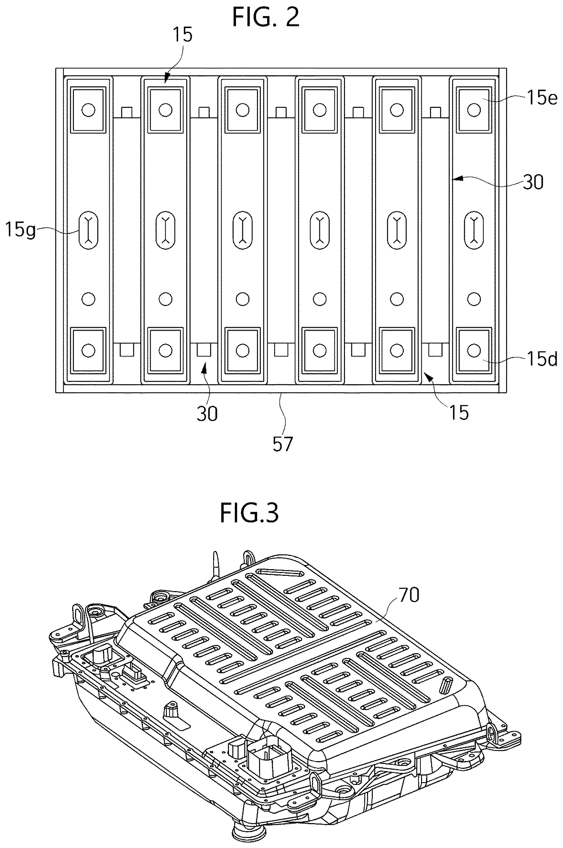

FIG. 2 is a plan view schematically illustrating a configuration of a secondary battery module 15 to which an insulation unit 30 is applied according to some embodiments of the present disclosure.

As shown in the drawing, the secondary battery module 15 according to embodiments may include a module case 57, a plurality of battery cells 15, and insulation units 30.

The module case 57 may provide an internal space with a certain volume. The module case 57 is a housing of the secondary battery module 17 and may accommodate the battery cells 15 and the insulation units 30 therein. Wiring including a bus bar or a control module may be applied to the module case 57.

The battery cells 15 may be separated from one another by the insulation unit 30. The insulation unit 30 may block heat transfer between the battery cells 15 and provide electrical insulation, as needed. The insulation unit 30 may be interposed between adjacent battery cells 15 and may maintain a gap between the battery cells. Various embodiments of the insulation unit 30 are described herein.

FIG. 3 is a perspective view of a battery pack 70 according to embodiments of the present disclosure. Referring to FIG. 3, the battery pack 70 may include an assembly to which individual batteries are electrically connected and a pack housing accommodating the same. **In** the drawings, for convenience of illustration, components including a bus bar, a cooling unit, external terminals for electrically connecting batteries, etc., are not shown. The battery pack 70 may be mounted on (or in) a vehicle. The vehicle may be, for example, an electric vehicle, a hybrid vehicle, or a plug-in hybrid vehicle. The vehicle may be a four-wheeled vehicle or a two-wheeled vehicle but is not limited thereto.

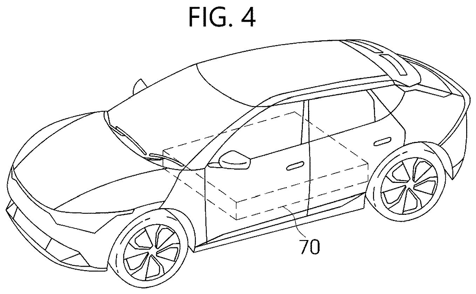

FIG. 4 shows a vehicle that includes the battery pack 70 shown in FIG. 3 on the lower body thereof. The vehicle may operate by (e.g., may be powered by) receiving power from the battery pack 70.

Hereinafter, suitable materials that may be usable for the secondary battery according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b- c}Mn_{d}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the herein formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0<x≤ 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

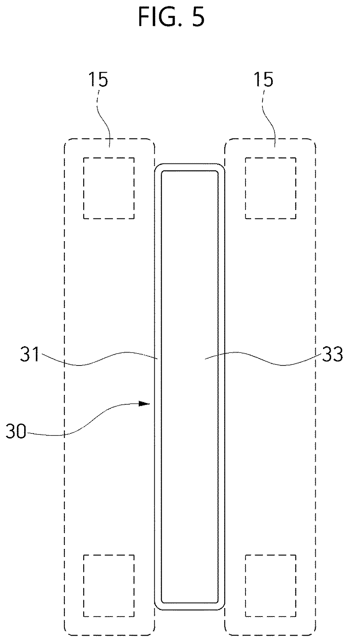

FIG. 5 is a plan view illustrating a basic configuration of the insulation unit 30 for a secondary battery module 15 according to some embodiments of the present disclosure.

As shown in the drawing, the insulation unit 30 for a secondary battery module 15 according to the present embodiment includes an exterior 31 located between the cells 15 and forming an internal space 33. The internal space 33 is filled with gas. In this way, an insulation effect of the insulation unit 30 of the present disclosure may be doubled by the exterior 31 with an empty internal space 33.

The exterior 31 may be made of a metal whose surface has undergone insulation treatment (e.g., stainless steel). The exterior 31 may be formed in a shape capable of being interposed between the cells 15, for example, a rectangular parallelepiped.

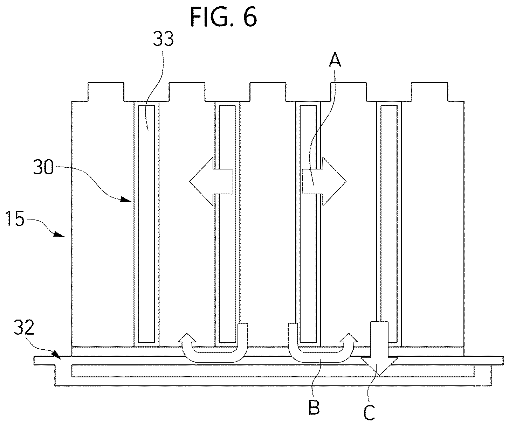

FIG. 6 shows a side view of the insulation unit 30 between the cells 15 shown in the plan view of FIG. 5. FIG. 6 shows that the insulation unit 30 is interposed between the cells 15 constituting the secondary battery module 15, and a cooling plate 32 is installed below each cell 15 to help cool the cells 15. Due to the insulation unit 30 according to embodiments of the present disclosure, heat A transferred laterally between the cells 15, heat B transferred through lower portions between the cells 15, and heat C transferred from the cells 15 to the cooling plate 32 may be effectively blocked by the internal space 33 of the insulation unit 30 and the filling gas.

In some embodiments, the gas filling the internal space 33 of the exterior 31 of the insulation unit 30 may include an inert gas. The inert gas may be, for example, Argon (Ar) gas, but the present disclosure is not limited thereto. Argon gas is known to have an excellent cooling function.

The internal space 33 may be filled with the gas into by forming an inlet in the exterior 31 during the manufacture of the insulation unit 30, injecting gas, and then sealing the inlet.

In addition to the insulating effect of the internal space 33 of the exterior 31 and the filling gas, in some embodiments of the present disclosure, when an event such as a fire or explosion occurs in which a temperature of the cell 15 rises above a predetermined temperature, the filling gas (e.g., Argon gas) of the internal space 33 may be discharged. When the filling gas is discharged to the outside of the exterior 31, a cooling effect may occur due to the Joule-Thomson effect.

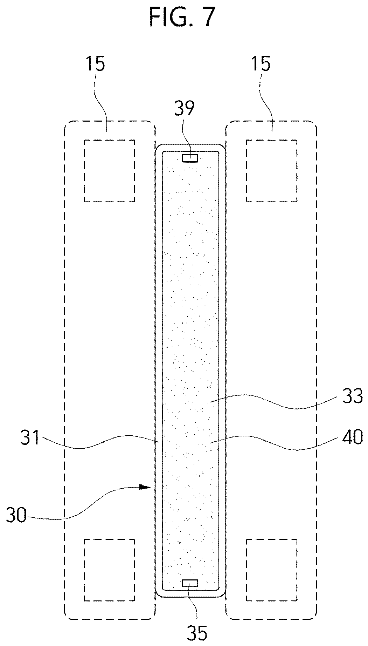

FIG. 7 is a plan view illustrating a configuration of the insulation unit 30 according to some embodiments of the present disclosure. A gas outlet 39 through which the filling gas 40 injected into the internal space 33 of the exterior 31 is discharged is installed. Although the gas outlet 39 is installed at an upper portion of the insulation unit 30 in FIG. 7, according to embodiments, the gas outlet 39 may be installed at a lower portion or side portion of the insulation unit 30. The gas outlet 39 may be designed to open automatically when an event occurs in an adjacent cell 15. This will be described herein.

In addition, a gas inlet 35 through which a gas is injected into the internal space 33 is shown in FIG. 7. During initial production of the insulation unit 30 in the factory or during use of the module, a gas may be injected into the internal space 33 through the gas inlet 35.

Although the gas outlet 39 and the gas inlet 35 are shown as separate components in FIG. 7, depending on the embodiment, the gas outlet 39 and the gas inlet 35 may be implemented as a single component (e.g., a check valve-based gas inlet/outlet).

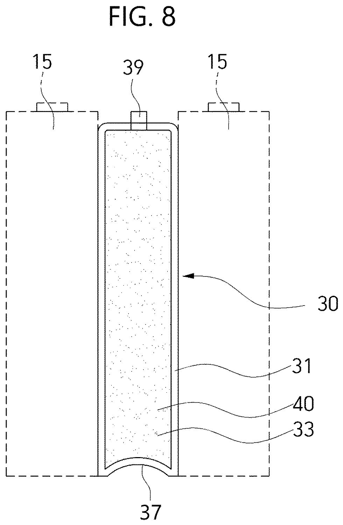

FIG. 8 is a side view illustrating the insulation unit 30 according to embodiments. A recessed portion 37 is formed to be recessed toward an internal space 33 in an exterior 31 of an insulation unit 30. The recessed portion 37 is for supporting the pressure when the internal space 33 is filled with gas at high pressure. FIG. 8 shows the recessed portion 37 being formed at the lower portion of the exterior 31, but the present disclosure is not limited thereto. In addition, although FIG. 8 shows that the recessed portion 37 is formed in a round shape, the recessed portion 37 may be formed in other shapes, for example, a triangular shape and a trapezoidal shape.

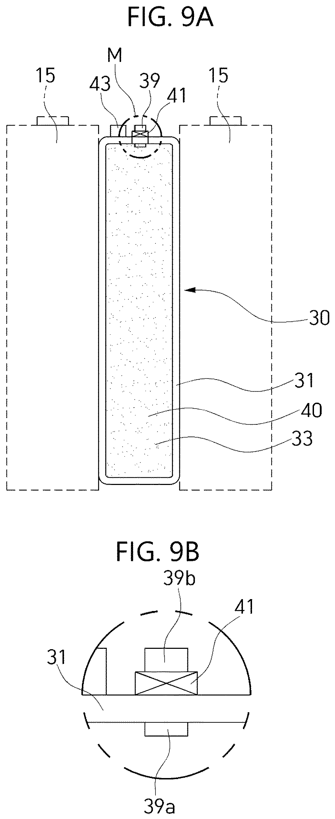

FIGS. 9A to 9C are diagrams illustrating a configuration of the gas outlet 39 according to some embodiments of the present disclosure.

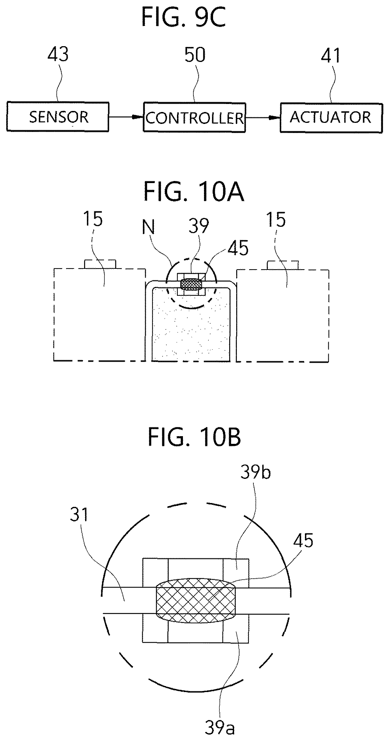

The gas outlet 39 may include a temperature sensor 43 configured to detect a temperature of the adjacent cell 15, and an actuator 41 configured to operate to discharge an internal filling gas according to the temperature detected by the temperature sensor 43. As shown in FIG. 9C, the filling gas discharge operation of the actuator 41 may be controlled by a controller 50. The controller 50 may receive a temperature detection signal from the temperature sensor 43, perform signal processing, and compare a processed signal with a preset reference value. When it is determined that the gas outlet 39 needs to be opened and the filling gas needs to be discharged by comparison with the preset reference value, the controller 50 may transmit an opening signal to the actuator 41 to open the actuator 41. The controller 50 may be included in a battery management system (BMS) for managing a secondary battery module, but the present disclosure is not limited thereto.

An example configuration of the gas outlet 39 is shown in FIG. 9B. The actuator 41 is installed on an outer side of a discharge hole (not shown) formed in the exterior 31, and an inner outlet tube 39a and an outer outlet tube 39b are installed to pass through the actuator 41. The actuator 41 may operate a valve (not shown) between the inner outlet tube 39a and the outer outlet tube 39b to discharge the filling gas from the inner outlet tube 39a to the outer outlet tube 39b.

FIGS. 10A and 10B are diagrams illustrating a configuration of the gas outlet 39 according to some embodiments of the present disclosure. FIG. 10B shows an enlarged view of region N of FIG. 10A.

The gas outlet 39 may include a meltable stopper 45 that melts due to a temperature increase of an adjacent cell 15. The meltable stopper 45 may block the discharge hole (not shown) of the insulation unit 30 when the temperature of the adjacent cell 15 is low, and the meltable stopper 45 may melt when the temperature of the adjacent cell 15 reaches a preset value. In this way, the gas filling the internal space 33 of the insulation unit 30 may be discharged.

An example configuration of the gas outlet 39 according to the present embodiment is shown in FIG. 10B. An inner outlet tube 39a and an outer outlet tube 39b are installed in a discharge hole (not shown) formed in an exterior 31. A passage formed between the inner outlet tube 39a and the outer outlet tube 39b is blocked by a meltable stopper 45. When the meltable stopper 45 melts, the inner outlet tube 39a and the outer outlet tube 39b are opened, and the filling gas in the internal space 33 may be discharged to the outside.

The meltable stopper 45 may be made of, for example, a polypropylene base material and an additive. A melting temperature of the meltable stopper 45 may be designed by diversifying a composition ratio of the base material and additive or the type of additive.

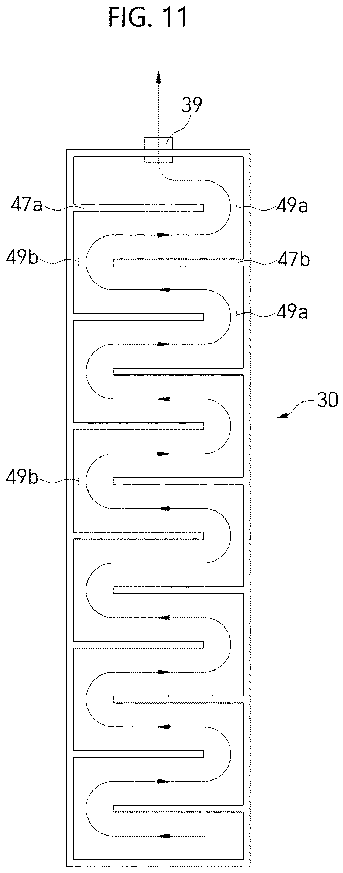

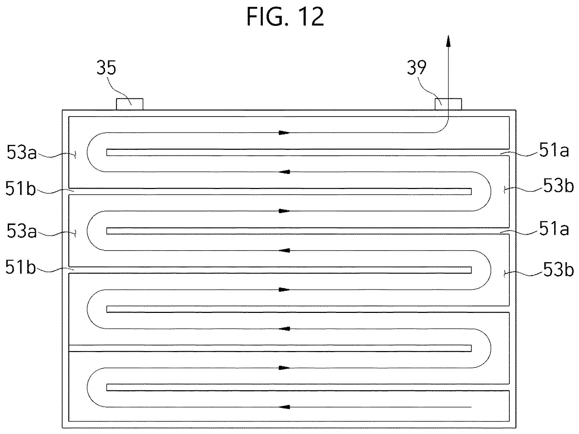

FIGS. 11 and 12 are diagrams illustrating an internal configuration of the exterior 31 of the insulation unit 30 according to some embodiments. In these embodiments, a plurality of partition walls are formed in the internal space 33 of the exterior 31 of the insulation unit 30. These partition walls divide the internal space 33 into a plurality of sub-spaces, allowing a filling gas to communicate between the sub-spaces.

FIG. 11 shows a structure in which sub-spaces are formed by a plurality of first partition walls 47a and a plurality of second partition walls 47b, which are respectively connected to facing first and second walls to form a narrow width of the exterior 31 of the insulation unit 30. In order for gas communication between the sub-spaces, a first opening 49a is formed in each first partition wall 47a, and a second opening 49b is formed in each second partition wall 47b. Since formation positions of the first opening 49a and the second opening 49b are offset, a flow path of gas passing through each sub-space may be extended, and thus a cooling effect due to the filling gas being discharged from the gas outlet 39 may be enhanced.

FIG. 12 shows a structure in which sub-spaces are formed by a plurality of third partition walls 51a and a plurality of fourth partition walls 51b, which are respectively connected to facing third and fourth walls to form a wide width of the exterior 31 of the insulation unit 30. Similarly, in order for gas communication between the sub-spaces, a third opening 53a is formed in each third partition wall 51a, and a second opening 53b is formed in each fourth partition wall 51b.

A method of manufacturing a secondary battery module to which the herein-described insulation unit 30 is applied will be described. For convenience of understanding, the secondary battery module shown in FIG. 2 and the insulation unit 30 of FIGS. 5 to 8 are referred to.

A method of manufacturing a secondary battery module according to some embodiments of the present disclosure includes disposing a plurality of battery cells 15 in a module case 57 that provides a space for accommodating the battery cells 15, filling an internal space 33 of an insulation unit 30 interposed between the battery cells 15 with a gas 40, and disposing the insulation unit 30 between the battery cells.

In some embodiments, the gas filling the internal space 33 of the insulation unit 30 may include an inert gas (e.g., Argon gas). In the filling of the internal space 33 of the insulation unit 30 with the gas 40, gas injection may be performed through the gas inlet 35 provided in the insulation unit 30.

The insulation unit 30 may include a plurality of partition walls formed in the internal space 33 to partition the internal space 33 into a plurality of sub-spaces and to allow the filling gas to communicate between the sub-spaces (see FIG. 11 or 12).

According to the present disclosure, by forming an internal space in an insulation unit disposed between battery cells of a secondary battery module and filling the internal space with gas, heat transferred laterally between the battery cells, heat transferred through lower portions between battery cells, heat transferred from the battery cells to a cooling plate can be effectively blocked by the internal space of the insulation unit and the filling gas.

In addition, since an inert gas, such as Argon, filling the internal space of the insulation unit is automatically discharged when an event such as a fire or explosion occurs in an adjacent cell, a cooling effect on adjacent cells can be exhibited, and thus a chain heat transfer to the cells can be blocked to prevent thermal runaway.

Although the present disclosure has been described herein with respect to embodiments thereof, the present disclosure is not limited thereto. Various modifications and variations can be made thereto by those skilled in the art within the scope of the present disclosure as defined by the appended claims and their equivalents.

## Claims

1. An insulation unit for a secondary battery module, comprising:
an exterior configured to be interposed between a plurality of battery cells disposed in a module case and configured to form an internal space,
wherein the internal space is filled with gas.

2. The insulation unit as claimed in claim 1, further comprising a gas outlet through which the gas filling the internal space is discharged.

3. The insulation unit as claimed in claim 2, wherein the exterior of the insulation unit comprises the gas outlet through which the gas filling the internal space is discharged.

4. The insulation unit as claimed in claim 2 or 3, wherein the gas outlet comprises:
a temperature sensor; and
an actuator configured to discharge the gas according to a temperature detected by the temperature sensor.

5. The insulation unit as claimed in claim 2 or 3, wherein the gas outlet comprises a meltable stopper that melts due to a rise in temperature to discharge the gas.

6. The insulation unit as claimed in any preceding claim, further comprising a gas inlet through which the gas is injected into the internal space.

7. The insulation unit as claimed in claim 6, wherein the exterior of the insulation unit comprises the gas inlet through which the internal space is filled with the gas.

8. The insulation unit as claimed in any preceding claim, wherein the gas comprises an inert gas.

9. The insulation unit as claimed in any preceding claim, wherein the exterior of the insulation unit comprises a recessed portion recessed toward the internal space.

10. The insulation unit as claimed in any preceding claim, wherein the exterior of the insulation unit comprises a plurality of partitions formed in the internal space and configured to divide the internal space into a plurality of sub-spaces and allow the gas to communicate between the sub-spaces.

11. A secondary battery module comprising:
a module case configured to provide an internal space;
a plurality of battery cells disposed in the module case; and
the insulation unit of any preceding claim,
wherein the insulation unit is interposed between the battery cells.

12. A method of manufacturing a secondary battery module, comprising:
disposing a plurality of battery cells in a module case that provides a space in which the battery cells are accommodated;
disposing an insulation unit between the battery cells; and
filling with gas an internal space of the insulation unit.

13. The method as claimed in claim 12, wherein the gas filling the internal space of the insulation unit comprises an inert gas.

14. The method as claimed in claim 12 or 13, wherein the insulation unit comprises a plurality of partitions formed in the internal space and configured to divide the internal space into a plurality of sub-spaces and allow the filling gas to communicate between the sub-spaces.
